# EUROPEAN PATENT APPLICATION

(11) **EP 4 266 834 A1**
(43) Date of publication of application: **25.10.2023**
(21) Application number: 21910175.5
(22) Date of filing: 01.12.2021
(51) Int. Cl.: H05H 1/24, B32B 1/08, F16L 11/04, C08J 7/00

(54) **MULTILAYER TUBULAR MOLDED BODY, PLASMA TREATMENT APPARATUS, AND METHOD FOR MANUFACTURING MULTILAYER TUBULAR MOLDED BODY**

(30) Priority: 21.12.2020 JP 2020211450
(71) Applicant: Toyox Co., Ltd., Kurobe-shi Toyama 938-8585 (JP)
(72) Inventor: NUMATA, Kenichi, Kurobe-shi, Toyama 938-8585 (JP); AOKI, Daichi, Kurobe-shi, Toyama 938-8585 (JP)
(74) Representative: Gill Jennings & Every LLP
(86) International application number: PCT/JP2021/044015
(87) International publication number: WO 2022/138023

(57) **Abstract**

[Problem] To provide a plasma treatment apparatus, which can uniformly and reliably plasma-treat the outer peripheral surface of an inner layer, and a multilayer tubular molded body having high adhesiveness between the inner layer and an outer layer by plasma-treating the outer peripheral surface of the inner layer using such plasma treatment apparatus, and a method for producing the same.

[Solution] The plasma treatment apparatus 100 has a dielectric 200 with an inner cavity 210 and having a cylindrical shape, a coiled inner electrode 300 positioned on the inner peripheral surface side of the dielectric 200 and wound along the axial direction, an outer electrode 400 positioned on the outer peripheral surface side of the dielectric 200 and applying an AC voltage between the outer electrode 400 and the inner electrode 300, and a gas supply part 500 supplying to the inner cavity 210 a gas to generate plasma by applying the AC voltage.

## Description

### TECHNICAL FIELD

The present invention relates to a multilayer tubular molded body, a plasma treatment apparatus, and a method for producing a multilayer tubular molded body.

### BACKGROUND ART

A plurality of characteristics required can be relatively easily imparted, and thus a multilayer tubular molded body may be used.

In this case, when an inner layer is formed from a non-polar polymer such as a polyolefin or a fluorine-based polymer, in order to cover the outer periphery thereof with an outer layer, it is required that an adhesive polymer layer be allowed to exist between them or an adhesive functional group be imparted to the fluorine-based polymer in advance.

Patent Literature 1, for example, discloses a multilayer tubular molded body, having an inner layer portion including a self-adhesive silicone rubber, and a barrier layer provided on the inner side of this inner layer portion and formed from a self-adhesive ethylene-tetrafluoroethylene copolymer.

Patent Literature 1 also describes that the surface facing the inner layer portion of the barrier layer may be roughened by plasma treatment. Patent Literature 1, however, does not describe a specific method for the plasma treatment.

Conventional plasma treatment is frequently performed with electrodes positioned on the inner side and the outer side of a barrier layer (cylindrical body). In such a method, however, plasma treatment of only the outer peripheral surface of the cylindrical body is difficult.

In addition, in the case of the plasma treatment of the outer peripheral surface of the cylindrical body, it is required to insert an electrode into the inner side of the cylindrical body or use the cylindrical body itself as a ground electrode.

In the case of the above structure, when a separation distance between the electrode and the outer peripheral surface of the cylindrical body is not uniform, unevenness in the treatment occurs on the outer peripheral surface due to the shape and arrangement of the electrode and the combination thereof. There is therefore a problem in that a target functional group cannot be introduced.

Then, when a functional group cannot be introduced to the outer peripheral surface, the inner layer, a cylindrical body, and the outer layer cannot be attached. In addition, the adhesive strength between the inner layer and the outer layer is easily reduced in a portion where unevenness in the treatment exists, which causes peeling because stress is concentrated in the portion.

### CITATION LIST

### PATENT LITERATURE

Patent Literature 1: Japanese Unexamined Patent Application Publication No. 2020-046047

### SUMMARY OF INVENTION

### TECHNICAL PROBLEM

An object of the present invention is to provide a plasma treatment apparatus, which can uniformly and reliably plasma-treat the outer peripheral surface of an inner layer, and a multilayer tubular molded body having high adhesiveness between the inner layer and an outer layer by plasma-treating the outer peripheral surface of the inner layer using such plasma treatment apparatus, and a method for producing the same.

### SOLUTION TO PROBLEM

Such object is achieved by the inventions of (1) to (11) described below.
(1) A multilayer tubular molded body, having an inner layer and an outer layer covering the outer periphery of the inner layer, wherein the outer peripheral surface of the inner layer is modified by plasma treatment.
(2) A plasma treatment apparatus, having
   a dielectric with an inner cavity and having a cylindrical shape,
   a coiled inner electrode positioned on the inner peripheral surface side of the dielectric and wound along the axial direction,
   an outer electrode positioned on the outer peripheral surface side of the dielectric and applying an AC voltage between the outer electrode and the inner electrode, and
   a gas supply part supplying to the inner cavity a gas to generate plasma by applying the AC voltage.
(3) The plasma treatment apparatus according to (2) above, wherein the pitch of wire rods forming the inner electrode is 0.5 to 10 mm.
(4) The plasma treatment apparatus according to (1) or (2) above, wherein the cross-sectional shape of a wire rod forming the inner electrode in the direction perpendicular to the longitudinal direction is a shape having angles.
(5) The plasma treatment apparatus according to any one of (2) to (4) above, wherein the outer electrode is formed in a net or foil-shaped cylindrical body.
(6) The plasma treatment apparatus according to any one of (2) to (5) above, wherein the maximum value of the AC voltage is 1 to 20 kV
(7) The plasma treatment apparatus according to any one of (2) to (6) above, wherein the frequency of the AC voltage is 1 to 30 kHz.
(8) The plasma treatment apparatus according to any one of (2) to (7) above, wherein the duration of applying the AC voltage is 0.1 to 20 seconds.
(9) A method for producing a multilayer tubular molded body, including
   a step of allowing an inner layer to pass through the inner cavity of the plasma treatment apparatus according to any one of (2) to (8) above and simultaneously plasma-treating the outer peripheral surface thereof, and
   a step of covering the outer periphery of the inner layer with an outer layer.
(10) The method for producing a multilayer tubular molded body according to (9) above, wherein a separation distance between the inner electrode and the inner layer is 1 to 10 mm.
(11) The method for producing a multilayer tubular molded body according to (9) or (10) above, wherein the inner layer is formed from a non-polar resin material.

### ADVANTAGEOUS EFFECT OF INVENTION

According to the present invention, it is possible to obtain a multilayer tubular molded body, in which the outer peripheral surface of an inner layer can be uniformly and reliably plasma-treated and also adhesiveness between the inner layer and an outer layer is high.

According to the present invention, it is also possible to plasma-treat only the outer peripheral surface without losing chemical resistance and leaching resistance of the inner peripheral surface of the inner layer.

In addition, plasma treatment can be performed with the shape of the inner layer retained in a cylindrical shape, and thus a fixed separation distance between an electrode and the inner layer is easily maintained, and uniform plasma treatment can be performed on the outer peripheral surface. Therefore, adhesiveness between the inner layer and the outer layer is improved, which also contributes to improvements in peel strength.

### BRIEF DESCRIPTION OF DRAWING

Fig. 1 is a perspective view which shows the structure of the end portion of a multilayer tubular molded body produced by the method for producing a multilayer tubular molded body of the present invention.
Fig. 2 is a schematic view which shows the overall structure of the plasma treatment apparatus of the present invention.
Fig. 3 is a cross-sectional view which shows a state in which the outer peripheral surface of an inner layer is plasma-treated using the plasma treatment apparatus in Fig. 2.

### DESCRIPTION OF EMBODIMENT

The multilayer tubular molded body, the plasma treatment apparatus and the method for producing a multilayer tubular molded body of the present invention will now be described in detail based on a suitable embodiment shown in the accompanying drawings.

### <Multilayer tubular molded body>

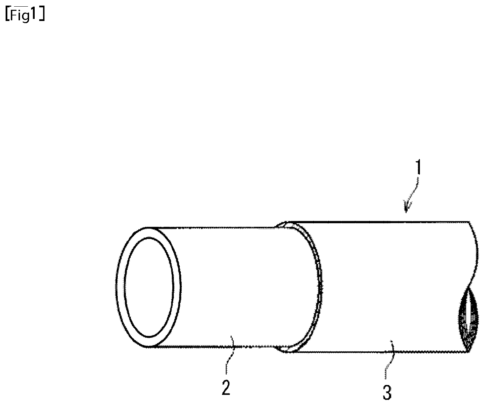

Fig. 1 is a perspective view which shows the structure of the end portion of a multilayer tubular molded body produced by the method for producing a multilayer tubular molded body of the present invention.

The multilayer tubular molded body 1 shown in Fig. 1 has an inner layer 2 and an outer layer 3 covering the outer periphery of the inner layer 2.

The structure of each layer will now be described in turn.

### <<Inner layer 2>>

The constituent material of the inner layer 2 is not particularly limited, and is preferably a non-polar (low-polar) resin material.

In the inner layer 2 formed from a non-polar resin material, the adhesive properties of the outer peripheral surface thereof are poor. Therefore, when covering the outer periphery of the inner layer 2 with the outer layer 3, it is required that an adhesive polymer layer be allowed to exist between the inner layer 2 and the outer layer 3 or an adhesive polymer be selected as the constituent material of the outer layer 3. In other words, the range of choice of materials which can be used to form the multilayer tubular molded body 1 becomes narrower, and it is not easy to obtain a multilayer tubular molded body 1 having target performance and functions.

In the present invention, therefore, a functional group to enhance adhesiveness to the outer layer 3 (hereinafter described as "adhesive functional group") is introduced to the outer peripheral surface of the inner layer 2 in advance before covering with the outer layer 3. That is, the outer peripheral surface of the inner layer 2 is modified by plasma treatment. By doing this, a multilayer tubular molded body 1 having high adhesiveness between the inner layer 2 and the outer layer 3 can be obtained regardless of the constituent materials of the inner layer 2 and the outer layer 3 without using an adhesive (binding agent).

Therefore, the present invention is suitably applied to produce a multilayer tubular molded body 1 having an inner layer 2 formed from a non-polar resin material.

Examples of the non-polar resin material include polytetrafluoroethylene (PTFE), tetrafluoroethylene-hexafluoropropylene copolymer (FEP), tetrafluoroethylene-perfluoroalkyl vinyl ether copolymer (PFA), tetrafluoroethylene-ethylene copolymer (ETFE), fluorine-based polymers such as polyvinylidene fluoride (PVDF), polyolefins such as polypropylene (PP), low density polyethylene (LDPE), linear low density polyethylene (LLDPE) and high density polyethylene (HDPE) and the like. These can be used individually or two or more of them can be used in combination.

When the inner layer 2 is formed from these materials, high chemical resistance and heat resistance can be imparted to the inner layer 2 (multilayer tubular molded body 1).

The weight average molecular weight of the constituent material of the inner layer 2 is preferably about 10,000 to 400,000 and more preferably about 50,000 to 110,000.

It should be noted that the weight average molecular weight is a value converted using standard polystyrene measured by the gel permeation chromatography (GPC) method in the description.

Other polymers and various additives may be also added to the constituent material of the inner layer 2 as long as the characteristics of the inner layer 2 are not lost.

Examples of other polymers include a styrene-based block copolymer, polyacrylic acid, polyacrylic acid esters and the like.

Examples of additives include antioxidants, heat stabilizers, light stabilizers, UV absorbers, neutralizers, lubricants, anti-fogging agents, slipping agents, cross-linking agents, cross-linking aids, dye, pigment, flame retardants, dispersants, anti-static agents, anti-blocking agents, inorganic fillers (such as silica, talc and mica) and the like.

The amount of the non-polar resin material contained in the inner layer 2 is preferably 75 mass% or more, more preferably 85 mass% or more, further preferably 95 mass% or more, and may be 100 mass%. In this case, characteristics based on the non-polar resin material can be adequately imparted to the inner layer 2.

Examples of the adhesive functional group introduced to the outer peripheral surface of the inner layer 2 include hydrophilic groups such as hydroxy group, carbonyl group and carboxy group, and hydrophobic groups such as alkyl group and vinyl group. These can be used individually or two or more of them can be used in combination.

When introducing a hydrophilic group as the adhesive functional group, a divinyl monomer and a silane coupling agent may be allowed to further react with this hydrophilic group. By doing this, a polymerizable functional group can be introduced to the outer peripheral surface of the inner layer 2. In this case, the adhesiveness between the inner layer 2 and the outer layer 3 is more easily enhanced.

Trimethylvinylsilane may be also added to a gas for plasma treatment. In this case, a vinyl group can be directly introduced to the outer surface of a polyolefin such as polyethylene.

### <<Outer layer 3>>

The constituent material of the outer layer 3 is not particularly limited. Examples thereof include polyvinyl chloride (PVC), thermoplastic polyurethane elastomer (TPU), silicone rubber and the like. These can be used individually or two or more of them can be used in combination.

These materials have excellent flexibility. In the inner layer 2 formed from a fluorine-based polymer or polyolefin, flexibility (pliability) is easily reduced; however, high flexibility (pliability) can be secured in the whole multilayer tubular molded body 1 by combining the outer layer 3 formed from the above material.

It should be noted that the polyvinyl chloride may be modified. Examples of such modified polyvinyl chloride include acrylic modified polyvinyl chloride, polyurethane modified polyvinyl chloride, ethylene-vinyl acetate copolymer modified polyvinyl chloride and the like.

The weight average molecular weight of the constituent material of the outer layer 3 is preferably about 40,000 to 200,000 and more preferably about 80,000 to 160,000.

When using polyvinyl chloride as the constituent material of the outer layer 3, various plasticizers may be added from the viewpoint of enhancing the flexibility of the outer layer 3.

Examples of plasticizers include phthalic acid esters such as dimethyl phthalate (DMP), diethyl phthalate (DEP), dibutyl phthalate (DBP), di-2-ethylhexyl phthalate (DEHP), di-n-decyl phthalate (DnDP) and diisononyl phthalate (DINP), adipic acid esters such as diisobutyl adipate (DIBA), dioctyl adipate (DOA), di-2-ethylhexyl adipate (DEHA) and diisononyl adipate (DINA), trimellitic acid esters such as trimellitic acid triesters, polyester plasticizers and the like.

In addition, various additives mentioned in the inner layer 2 may be added to the constituent material of the outer layer 3 as long as the characteristics of the outer layer 3 are not lost.

The amount of the above material contained in the outer layer 3 is preferably about 40 to 70 mass% and more preferably about 45 to 65 mass%. In this case, flexibility based on the above material can be adequately imparted to the outer layer 3.

The ratio of the thickness of the outer layer 3 to the thickness of the inner layer 2 is preferably about 1 to 10 and more preferably about 3 to 7. By satisfying such a relationship, the flexibility of the multilayer tubular molded body 1 is sufficiently enhanced, and excellent chemical resistance and heat resistance can also be imparted to the multilayer tubular molded body 1.

A specific thickness value of the inner layer 2 is not particularly limited, and is preferably about 0.1 to 3 mm and more preferably about 0.2 to 0.5 mm.

A specific thickness value of the outer layer 3 is also not particularly limited, and is preferably about 0.5 to 4 mm and more preferably about 0.7 to 3 mm.

The adhesive strength of the outer layer 3 to the inner layer 2 is preferably 10 N/25 mm or more, more preferably 20 N/25 mm or more and further preferably 40 N/25 mm or more. It should be noted that the upper limit of the adhesive strength is commonly about 100 N/25 mm. In this case, it can be judged that separation between the inner layer 2 and the outer layer 3 is sufficiently difficult in the multilayer tubular molded body 1. Therefore, the multilayer tubular molded body 1 having such adhesive strength is suitably used as a tubular molded body positioned in an operating portion.

### <Plasma treatment apparatus>

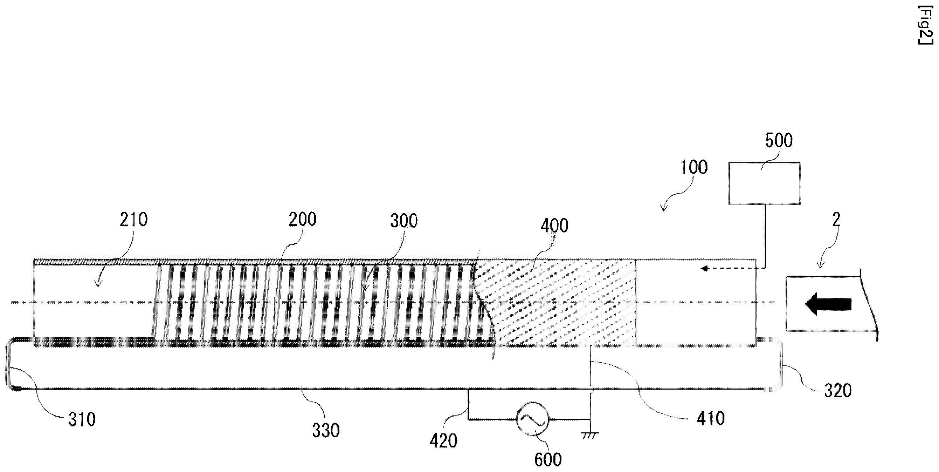

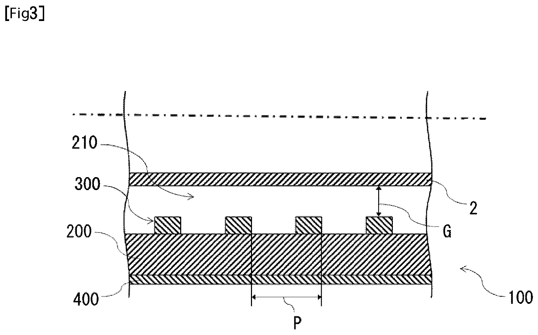

Fig. 2 is a schematic view which shows the overall structure of the plasma treatment apparatus of the present invention, and Fig. 3 is a cross-sectional view which shows a state in which the outer peripheral surface of the inner layer is plasma-treated using the plasma treatment apparatus in Fig. 2

The plasma treatment apparatus 100 shown in Fig. 2 has a cylindrical dielectric 200 with an inner cavity 210, a coiled inner electrode 300 positioned on the inner peripheral surface side of the dielectric 200 and wound along the axial direction, an outer electrode 400 positioned on the outer peripheral surface side of the dielectric 200 and applying an AC voltage between the outer electrode 400 and the inner electrode 300, and a gas supply part 500 supplying to the inner cavity 210 a gas to generate plasma by applying the AC voltage.

In addition, a wire 330 connects between a leader line 310 on one end of the inner electrode 300 and a leader line 320 on the other end, and an AC power supply 600 is connected via a leader line 410 and a wire 420. The outer electrode 400 is grounded via the leader line 410, and the wire 420 and the wire 330 are electrically conducted. It should be noted that the leader line 310, the leader line 320, the wire 330, the wire 420 and the leader line 410 are covered with an insulating material.

An AC flows through the inner electrode 300 while a gas is supplied from the gas supply part 500 to the inner cavity 210, to generate a plasma discharge. Consequently, plasma is intensively generated in the inner cavity 210, and the inner layer 2 is allowed to pass through this inner cavity 210 to selectively plasma-treat the outer peripheral surface of the inner layer 2.

Each structure will now be described in turn.

### «Dielectric 200»

As the constituent material of the dielectric 200, a dielectric material having relative permittivity (εᵣ) and heat resistance as high as possible is preferred, and ceramics such as quartz (εᵣ = 3.8), alumina (εᵣ = 9.4) and boron nitride (εᵣ = 12) are more preferred.

The thickness of the dielectric 200 is not particularly limited, and is preferably about 0.5 to 10 mm and more preferably about 1 to 5 mm.

The length of the dielectric 200 is also not particularly limited, and is preferably about 50 to 500 mm and more preferably about 100 to 300 mm.

### <<Inner electrode 300>>

The inner electrode (applied electrode) 300 is positioned along the axial direction of the dielectric 200, and comes into contact with the inner peripheral surface of the dielectric 200. This inner electrode 300 is formed in a coiled body obtained by winding a linear or strip wire rod in a coiled form along the axial direction of the dielectric 200.

The inner electrode can also be formed from a plurality of rod-shaped bodies positioned along the axial direction of the dielectric 200 and arranged along the circumferential direction, a plurality of ring-shaped bodies positioned along the axial direction of the dielectric 200 and concentrically with the dielectric 200, and the like.

However, when the inner electrode is formed from rod-shaped bodies, it is required to adjust the number of the rod-shaped bodies depending on the size (outer diameter) of the inner layer 2, in order to directly treat the inner layer 2 in a cylindrical form. In addition, because the rod-shaped bodies are positioned along the axial direction of the dielectric 200 (the insertion direction of the inner layer 2), there is a concern that unevenness in the treatment will occur along the circumferential direction of the outer peripheral surface of the inner layer 2.

Meanwhile, when the inner electrode is formed from ring-shaped bodies, it is required to increase the number of ring-shaped bodies, in order to gain time for plasma treatment. In this case, it is required to position ring-shaped bodies so that the bodies next to each other will not overlap, in order that unevenness in the treatment will not occur along the axial direction.

However, when the inner electrode 300 is formed in a coiled body as the present invention, plasma treatment can be performed without unevenness along the circumferential direction and the axial direction of the outer peripheral surface of the inner layer 2.

The pitch of wire rods forming the inner electrode 300 (P in Fig. 3) is preferably about 0.5 to 10 mm and more preferably about 1 to 7.5 mm. In this case, gaps between the wound wire rods can be sufficiently filled with the generated plasma, and accordingly it is easy to plasma-treat the outer peripheral surface of the inner layer 2 more uniformly.

The cross-sectional shape of a wire rod forming the inner electrode 300 in the direction perpendicular to the longitudinal direction may be a circle, but is preferably a shape having angles such as a rectangle (square) as shown in Fig. 3, triangle or M letter shape. In this case, a plasma discharge is easily generated from the angle portions of the wire rod towards the inner layer 2.

The cross-section area of a wire rod is not particularly limited, and is preferably about 0.001 to 9 mm² and more preferably about 0.005 to 2 mm².

The length of the coiled portion (portion except for the leader lines 310 and 320) of the inner electrode 300 is also not particularly limited, and is preferably about 25 to 250 mm and more preferably about 50 to 200 mm.

The constituent material of the inner electrode 300 (wire rod) may be an electrically conductive material, and is not particularly limited. Examples thereof include iron, stainless steel, copper, silver, gold, platinum, palladium, tungsten, nickel, aluminum, carbon and the like. These can be used individually or two or more of them can be used in combination.

### <<Outer electrode 400»

The outer electrode (ground electrode) 400 is positioned along the axial direction of the dielectric 200 and comes into contact with the outer peripheral surface of the dielectric 200. This outer electrode 400 is formed in a net or foil (sheet)-shaped cylindrical body positioned along the axial direction of the dielectric 200.

By forming the outer electrode 400 in a cylindrical shape body, coupled with the effects of the inner electrode 300 formed in the coiled body, the outer peripheral surface of the inner layer 2 can be plasma-treated without unevenness along the circumferential direction.

The thickness of the outer electrode 400 is not particularly limited, and is preferably about 0.01 to 1 mm and more preferably about 0.05 to 0.5 mm.

In addition, the length of the outer electrode 400 is preferably a size which can encompass the coiled portion of the inner electrode 300.

The constituent material of the outer electrode 400 may be an electrically conductive material, and is not particularly limited. Examples thereof include iron, stainless steel, copper, silver, gold, platinum, palladium, tungsten, nickel, aluminum, carbon and the like. These can be used individually or two or more of them can be used in combination.

According to the plasma treatment apparatus 100 having the structure described above, the inner layer 2 can be allowed to pass through the inner cavity 210 without the deformation, and thus the outer peripheral surface thereof can be selectively plasma-treated. In addition, unevenness in the treatment of the outer peripheral surface of the inner layer 2 along the circumferential direction does not easily occur.

In conventional plasma treatment apparatuses, electrodes are positioned on the inner side and the outer side of the inner layer 2. In this case, however, the inner peripheral surface of the inner layer 2 can also be unintentionally plasma-treated. When the inner peripheral surface of the inner layer 2 is plasma-treated, there is a risk that the functions of the inner layer 2 (e.g. chemical resistance, water repellency, antifouling properties, and extractability) will be reduced or disappear. Therefore, it is preferable to avoid the plasma treatment of the inner peripheral surface of the inner layer 2. According to the plasma treatment apparatus 100 in the present embodiment, such a disadvantage can be prevented.

### <Method for producing multilayer tubular molded body>

The method for producing a multilayer tubular molded body of the present invention has a step of allowing the inner layer 2 to pass through the inner cavity 210 of the plasma treatment apparatus 100 and simultaneously plasma-treating the outer surface thereof (plasma treatment step), and a step of covering the outer periphery of the inner layer 2 with an outer layer (covering step).

### [1] Plasma treatment step

First, a gas (hereinafter, described as "gas for plasma treatment") is supplied from the gas supply part 500 to the inner cavity 210 of the plasma treatment apparatus 100. In this state, an AC voltage is applied between the inner electrode 300 and the outer electrode 400 by the AC power supply 600. By this, a plasma discharge is generated in the inner cavity 210 and plasma is intensively generated.

Next, the inner layer 2 is allowed to pass through the inner cavity 210. Therefore, the outer peripheral surface of the inner layer 2 is plasma-treated serially from the end portion thereof.

At this time, a separation distance between the inner electrode 300 and the inner layer 2 (G in Fig. 3) is not particularly limited, and is preferably about 1 to 10 mm, more preferably about 1 to 5 mm and further preferably about 1 to 3 mm. When the separation distance between the inner electrode 300 and the inner layer 2 is set within the above range, changes in the quality and deterioration of the inner layer 2 are prevented and also the outer peripheral surface thereof can be selectively plasma-treated.

By this plasma treatment, the outer peripheral surface of the inner layer 2 is excited, and an adhesive functional group can be introduced by the substitution of an element existing on the outer peripheral surface depending on the type of gas.

Examples of the gas for plasma treatment include noble gases such as argon and helium, carbon dioxide, carbon monoxide, oxygen, tetrafluoromethane, methane, ethane and the like. These can be used individually or two or more of them can be used as a mixed gas.

For example, when a carboxy group is introduced to the outer peripheral surface of the inner layer 2 formed from high density polyethylene (HDPE), it is preferred that the separation distance G between the inner electrode 300 and the inner layer 2 be set to 1 to 2 mm, and a mixed gas including argon, carbon dioxide and methane in an amount ratio of 20 to 99 : 80 to 0.5 : 2 to 0 be used as the gas for plasma treatment.

The maximum value of the AC voltage is preferably about 1 to 20 kV and more preferably about 5 to 10 kV

The frequency of the AC voltage is preferably about 1 to 30 kHz and more preferably about 5 to 15 kHz.

The time to apply the AC voltage is preferably about 0.1 to 20 seconds and more preferably about 1 to 10 seconds.

By plasma treatment on such conditions, a target adhesive functional group can be more accurately introduced to the outer peripheral surface of the inner layer 2.

### [2] Covering step

Next, the outer layer 3 is formed on the outer peripheral surface of the inner layer 2 by e.g. extrusion molding. Therefore, the multilayer tubular molded body 1 is obtained.

According to the present invention, an adhesive functional group is introduced to the outer peripheral surface of the inner layer 2 in advance, and thus the outer layer 3 can be directly and firmly attached to the inner layer 2 without using an adhesive (binding agent).

It should be noted that after the outer periphery of the inner layer 2 is covered with the outer layer 3, the outer layer 3 may be treated by heating depending on the constituent material of the outer layer 3 to further enhance the adhesiveness between the inner layer 2 and the outer layer 3.

When an addition reaction type silicone rubber, for example, is used as the constituent material of the outer layer 3, a silane coupling agent having a vinyl group is applied onto the outer peripheral surface of the inner layer 2 after plasma treatment, and the surface is covered with the addition reaction type silicone rubber to form the outer layer 3, and then heating treatment can be performed at about 120 to 180°C (secondary curing treatment).

In addition, when a silane coupling agent is not used, a divinyl monomer is added to a gas to generate plasma at the time of plasma treatment to introduce the vinyl group to the outer peripheral surface of the inner layer 2. The surface is then covered with the addition reaction type silicone rubber to form the outer layer 3, and then heating treatment can be performed at about 120 to 180°C (secondary curing treatment).

The multilayer tubular molded body 1 as described above has sufficient flexibility and excellent chemical resistance and excellent heat resistance. Because of this, the multilayer tubular molded body 1 is suitably used in e.g. fields such as food processing, cosmetic production, and chemical production.

For example, a multilayer tubular molded body 1, which can be applied to fields required to have ultra-low leaching properties which have been achieved only by a single layer product of e.g. PFA (e.g. semiconductor production field, pharmaceutical (bio) field, etc.), can be easily produced.

The multilayer tubular molded body 1 as described above can be used as e.g. a tube, a hose, etc.

Furthermore, the outer periphery of the outer layer 3 may be covered with the outermost layer in the multilayer tubular molded body 1.

In addition, the multilayer tubular molded body 1 can be used as a pressure resistant hose by positioning a reinforcement layer between the inner layer 2 and the outer layer 3 or between the outer layer 3 and the outermost layer.

The plasma treatment apparatus and the method for producing a multilayer tubular molded body of the present invention have been described above. It should be noted, however, that the present invention is not limited to the structure in the above-described embodiment.

In the plasma treatment apparatus of the present invention, any structure may be added to the structure in the above-described embodiment, or the structure in the above-described embodiment may be replaced with any structure displaying the same function.

In addition, in the method for producing a multilayer tubular molded body of the present invention, any step may be added to the method in the above-described embodiment, or the method may be replaced with any step providing the same function.

### REFERENCE SIGN LIST

- 1: Multilayer tubular molded body
- 2: Inner layer
- 3: Outer layer
- 100: Plasma treatment apparatus
- 200: Dielectric
- 210: Inner cavity
- 300: Inner electrode
- 310: Leader line
- 320: Leader line
- 330: Wire
- 400: Outer electrode
- 410: Leader line
- 420: Wire
- 500: Gas supply part
- 600: AC power supply
- G: Separation distance
- P: Pitch

## Claims

1. A multilayer tubular molded body, having an inner layer and an outer layer covering an outer periphery of the inner layer, wherein an outer peripheral surface of the inner layer is modified by plasma treatment.

2. A plasma treatment apparatus, having
a dielectric with an inner cavity and having a cylindrical shape,
a coiled inner electrode positioned on an inner peripheral surface side of the dielectric and wound along an axial direction,
an outer electrode positioned on an outer peripheral surface side of the dielectric and applying an AC voltage between the outer electrode and the inner electrode, and
a gas supply part supplying to the inner cavity a gas to generate plasma by applying the AC voltage.

3. The plasma treatment apparatus according to claim 2, wherein a pitch of wire rods forming the inner electrode is 0.5 to 10 mm.

4. The plasma treatment apparatus according to claim 2 or 3, wherein a cross-sectional shape of a wire rod forming the inner electrode in a direction perpendicular to a longitudinal direction is a shape having angles.

5. The plasma treatment apparatus according to any one of claims 2 to 4, wherein the outer electrode is formed in a net or foil-shaped cylindrical body.

6. The plasma treatment apparatus according to any one of claims 2 to 5, wherein a maximum value of the AC voltage is 1 to 20 kV

7. The plasma treatment apparatus according to any one of claims 2 to 6, wherein a frequency of the AC voltage is 1 to 30 kHz.

8. The plasma treatment apparatus according to any one of claims 2 to 7, wherein a time to apply the AC voltage is 0.1 to 20 seconds.

9. A method for producing a multilayer tubular molded body, comprising
a step of allowing an inner layer to pass through the inner cavity of the plasma treatment apparatus according to any one of claims 2 to 8 and simultaneously plasma-treating an outer peripheral surface thereof, and
a step of covering an outer periphery of the inner layer with an outer layer.

10. The method for producing a multilayer tubular molded body according to claim 9, wherein a separation distance between the inner electrode and the inner layer is 1 to 10 mm.

11. The method for producing a multilayer tubular molded body according to claim 9 or 10, wherein the inner layer is formed from a non-polar resin material.
